# EUROPEAN PATENT SPECIFICATION

(11) **EP 4 050 715 B1**
(45) Date of publication and mention of the grant of the patent: **10.09.2025**
(21) Application number: 21817334.2
(22) Date of filing: 27.05.2021
(51) Int. Cl.: H01M 50/204, H01M 50/244, H01M 50/262, H01M 50/242, H01M 50/24, H01M 50/249

(54) **BATTERY PACK, ELECTRONIC DEVICE, AND VEHICLE**
BATTERIEPACK, ELEKTRONISCHE VORRICHTUNG UND FAHRZEUG
BLOC-BATTERIE, DISPOSITIF ÉLECTRONIQUE, ET VÉHICULE

(30) Priority: 02.06.2020 KR 20200066574
(43) Date of publication of application: 31.08.2022
(73) Proprietor: LG Energy Solution, Ltd., Seoul 07335 (KR)
(72) Inventor: PARK, Jin-Yong, Daejeon 34122 (KR); KIM, Kyung-Woo, Daejeon 34122 (KR); MUN, Jeong-O, Daejeon 34122 (KR); PARK, Jhin-Ha, Daejeon 34122 (KR); CHI, Ho-June, Daejeon 34122 (KR); JIN, Hee-Jun, Daejeon 34122 (KR)
(74) Representative: Plasseraud IP
(86) International application number: PCT/KR2021/006626
(87) International publication number: WO 2021/246718

(56) References cited:
- WO-A1-2006/090904
- WO-A1-2014/061109
- WO-A1-2020/101209
- CN-U- 206 059 468
- JP-A- 2006 236 826
- JP-A- 2013 129 391
- JP-A- 2014 194 907
- JP-A- 2019 147 547
- JP-A- 2019 147 547
- JP-A- 2019 192 329
- KR-A- 20140 044 710
- US-A1- 2012 312 614

## Description

### TECHNICAL FIELD

The present disclosure relates to a battery pack, an electronic device and a vehicle, and more particularly, to a battery pack with improved safety against external vibrations or impacts, and an electronic device and a vehicle comprising the same.

The present application claims the benefit of Korean Patent Application No. 10-2020-0066574 filed on June 2, 2020 with the Korean Intellectual Property Office.

### BACKGROUND ART

Recently, with the rapid increase in demand for portable electronic products such as laptop computers, video cameras and mobile phones and the extensive development of electric vehicles, accumulators for energy storage, robots and satellites, many studies are being made on high performance secondary batteries that can be repeatedly recharged.

Currently, commercially available secondary batteries include nickel-cadmium batteries, nickel-hydrogen batteries, nickel-zinc batteries, lithium secondary batteries and the like, and among them, lithium secondary batteries have little or no memory effect, and thus they are gaining more attention than nickel-based secondary batteries for their advantages that recharging can be done whenever it is convenient, the self-discharge rate is very low and the energy density is high.

A lithium secondary battery primarily uses a lithium-based oxide and a carbon material as a positive electrode active material and a negative electrode active material respectively. Additionally, the lithium secondary battery includes an electrode assembly including a positive electrode plate and a negative electrode plate coated with the positive electrode active material and the negative electrode active material respectively with a separator interposed between the positive electrode plate and the negative electrode plate, and a packaging or a battery case in which the electrode assembly is hermetically received together with an electrolyte solution.

Additionally, lithium secondary batteries may be classified into can-type secondary batteries including the electrode assembly embedded in a metal can and pouch-type secondary batteries including the electrode assembly embedded in a pouch of an aluminum laminate sheet according to the shape of the packaging.

Recently, in particular, there is a growing demand for large capacity battery packs used in electric vehicle applications. Since the large capacity battery pack includes a plurality of battery modules, to improve the safety against external impacts, the number of components of a pack cover increases, and as the number of components increases, the volume of the battery modules that can be received in the battery pack reduces and the energy density reduces.

Moreover, the battery pack used in an environment in which vibrations or external impacts frequently occur such as vehicles needs to stably fix the plurality of battery modules to the pack cover to effectively improve the durability.

Further prior art is described in JP 2019 147547 A, WO 2014/061109 A1, JP 2014 194907 A, JP 2013 129391 A and US 2012/312614 A1.

### DISCLOSURE

### Technical Problem

The present disclosure is designed to solve the above-described problem, and therefore the present disclosure is directed to providing a battery pack with improved safety against external vibrations or impacts, and an electronic device and a vehicle comprising the same.

These and other objects and advantages of the present disclosure may be understood by the following description, and will be apparent from the embodiments of the present disclosure. In addition, it will be readily appreciated that the objects and advantages of the present disclosure may be realized by means and combinations thereof.

### Technical Solution

To achieve the above-described object, a battery pack according to the present disclosure includes a pack cover including an upper cover and a lower cover and having an empty space inside, edge portions of each of the upper cover and the lower cover being coupled to each other, and a battery module including a plurality of battery cells, a module case in which the plurality of battery cells are received, and a side frame having one side coupled to the module case and the other side interposed between the upper cover and the lower cover and configured to be coupled to the edge portions of each of the upper cover and the lower cover, wherein the battery module further includes a fixed frame having one side coupled to the module case and the other side connected to at least one of the upper cover or the lower cover, wherein the battery pack of the present disclosure further includes a cross beam extending in a direction and coupled to an inner side of the lower cover, wherein the other side of the fixed frame is coupled to the cross beam and connected to the lower cover, and a second fastening member having a top configured to be coupled to the upper cover and the external frame disposed on the outer side of the upper cover, and a bottom configured to be coupled to each of the fixed frame and the cross beam.

Additionally, the side frame may include, on the other side, a protrusion extending in a horizontal direction to the edge portions of each of the upper cover and the lower cover, the upper cover may include a first edge portion bent down to wrap an upper surface and a side of the protrusion, the lower cover may include a second edge portion bent up to wrap a lower surface and the side of the protrusion, and the protrusion, the first edge portion and the second edge portion may be fastened to one another.

Furthermore, the upper cover may include a first coupling portion extending in an outward direction from end of the first edge portion, and the lower cover may include a second coupling portion fastened to the first coupling portion and extending in the outward direction from an end of the second edge portion.

Additionally, the battery pack may further include a first gasket interposed between the first edge portion and the protrusion, a second gasket interposed between the second edge portion and the protrusion, and a third gasket interposed between the first coupling portion and the second coupling portion.

Further, the battery pack of the present disclosure may further include a first fastening member having a top configured to be coupled to an external frame disposed on an outer side of the upper cover, and configured to fasten the protrusion, the first edge portion and the second edge portion.

Further, the side frame may include a first insertion portion having a recessed space into which a part of the module case is inserted, and the fixed frame may include a second insertion portion having a recessed space into which a part of the module case is inserted.

To achieve the above-described object, an electronic device according to the present disclosure includes at least one battery pack.

Further, to achieve the above-described object, a vehicle according to the present disclosure includes at least one battery pack.

### Advantageous Effects

According to an aspect of the present disclosure, the battery pack of the present disclosure includes the battery module including the plurality of battery cells, the module case in which the plurality of battery cells are received , and the side frame having one side coupled to the module case and the other side interposed between the upper cover and the lower cover and coupled to the edge portions of the upper cover and the lower cover, and thus the side frame may serve as sidewalls to support the pack cover in the vertical direction, thereby reinforcing the strength of the pack cover without a separate sidewall member.

Additionally, according to an aspect of an embodiment of the present disclosure, the battery pack of the present disclosure includes the first coupling portion in the upper cover and the second coupling portion in the lower cover, thereby fastening the upper cover and the lower cover with a stronger coupling force along with the coupling structure between the first edge portion and the second edge portion. Accordingly, the tight coupling structure of the battery pack may safely protect the battery module received in the battery pack from strong external impacts. Accordingly, it is possible to effectively improve the safety of the battery pack.

Moreover, according to another aspect of the present disclosure, the battery pack of the present disclosure further includes the first fastening member configured to be coupled to the external frame to effectively prevent the protrusion, the first edge portion and the second edge portion fastened to each other from moving by external impacts. The outer peripheral area of the pack cover of the present disclosure may be fixed to the external frame by the first fastening member, thereby stably fixing the battery pack in an environment in which frequent vibrations occur such as vehicles. Accordingly, the internal components of the battery pack may be less affected by vibrations or external impacts.

### BRIEF DESCRIPTION OF THE DRAWINGS

The accompanying drawings illustrate the preferred embodiments of the present disclosure, and together with the following detailed description, serve to provide a further understanding of the technical aspect of the present disclosure. However, the present disclosure should not be construed as being limited to the drawings.
FIG. 1 is a schematic perspective view of a battery pack according to an embodiment of the present disclosure.
FIG. 2 is a conceptual diagram of the components of a battery pack according to an embodiment of the present disclosure.
FIG. 3 is a schematic perspective view of a plurality of battery cells, a busbar and a busbar frame of a battery pack according to an embodiment of the present disclosure.
FIG. 4 is a schematic partial enlarged perspective view of a battery pack according to an embodiment of the present disclosure.
FIG. 5 is a schematic partial cross-sectional view of FIG. 1, taken along the line A-A', showing the internal configuration of the components of the battery pack.
FIG. 6 is a schematic partial perspective view of a first gasket of a battery pack according to another embodiment of the present disclosure.
FIG. 7 is a schematic partial cross-sectional view of FIG. 1, taken along the line C-C', showing the internal configuration of the components of the battery pack and an external frame.
FIG. 8 is a schematic perspective view of a side frame of a battery pack according to another embodiment of the present disclosure.
FIG. 9 is a schematic perspective view of a fixed frame of a battery pack according to another embodiment of the present disclosure.

### DETAILED DESCRIPTION

Hereinafter, the preferred embodiments of the present disclosure will be described in detail with reference to the accompanying drawings. Prior to the description, it should be understood that the terms or words used in the specification and the appended claims should not be construed as being limited to general and dictionary meanings, but rather interpreted based on the meanings and concepts corresponding to the technical aspects of the present disclosure on the basis of the principle that the inventor is allowed to define the terms appropriately for the best explanation.

Therefore, the embodiments described herein and the illustrations shown in the drawings are just a most preferred embodiment of the present disclosure, but not intended to fully describe the technical aspects of the present disclosure, so it should be understood that a variety of other equivalents and modifications could have been made thereto at the time that the application was filed.

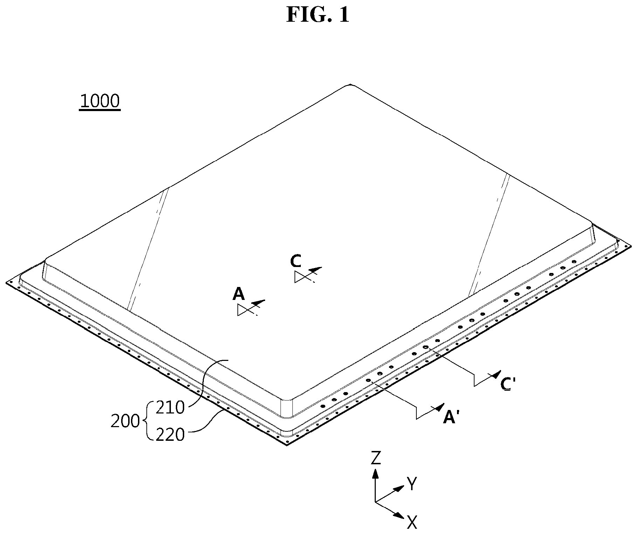

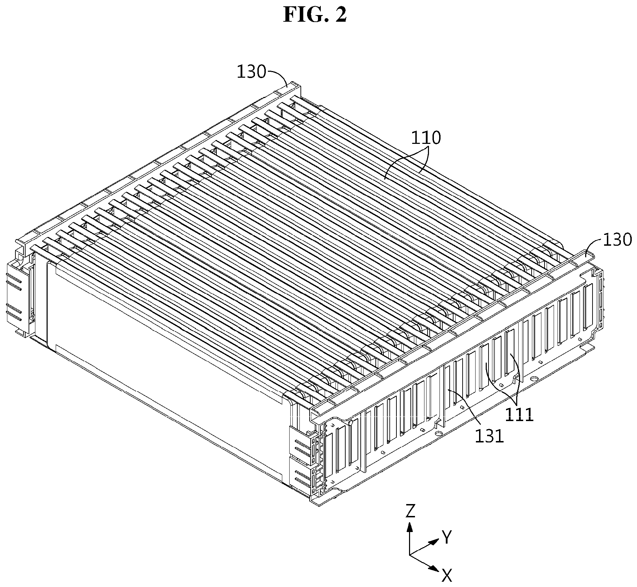

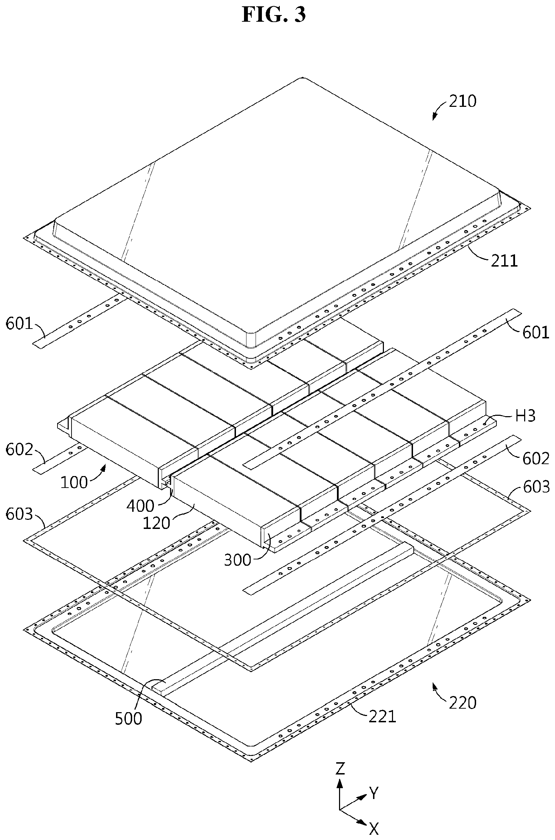

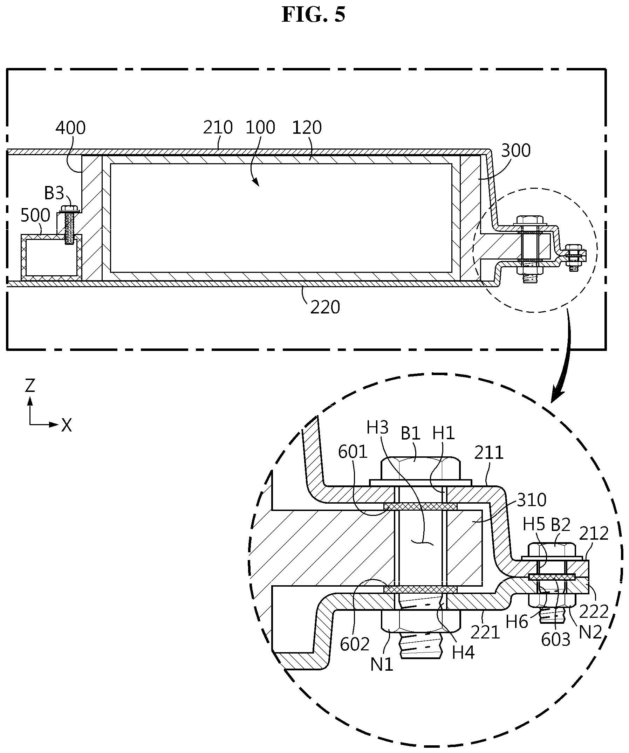

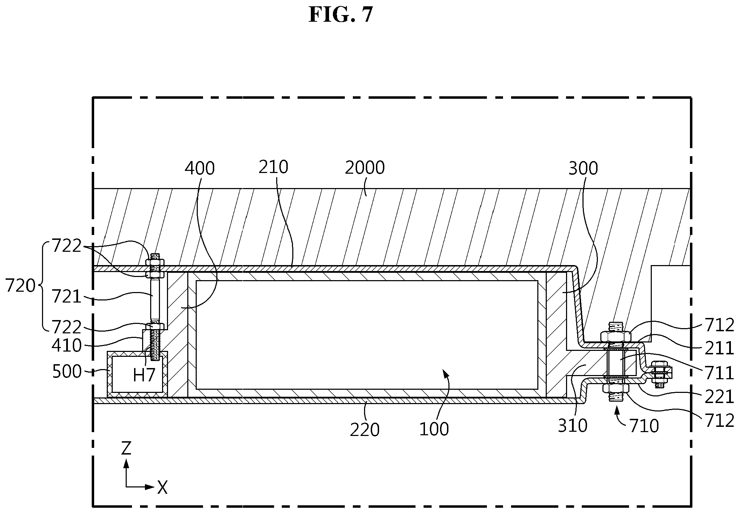

FIG. 1 is a schematic perspective view of a battery pack according to an embodiment of the present disclosure. FIG. 2 is a conceptual diagram of the components of the battery pack according to an embodiment of the present disclosure. Additionally, FIG. 3 is a schematic perspective view of a plurality of battery cells, a busbar and a busbar frame of the battery pack according to an embodiment of the present disclosure. Although FIGS. 1 and 3 do not show bolts and nuts fastened to the battery pack for convenience of description, bolts and nuts are applied to fasten a pack cover and a battery module as shown in FIGS. 5 and 7 described below. For reference, in FIG. 1, the X axis direction is the right direction, the Y axis direction is the rear direction and the Z axis direction is the upper direction.

Referring to FIGS. 1 to 3, the battery pack 1000 of the present disclosure includes a pack cover 200 and a battery module 100. The battery module 100 may include a plurality of battery cells 110.

Specifically, the pack cover 200 may include an upper cover 210 and a lower cover 220. The upper cover 210 may have an empty space inside. Additionally, the lower cover 220 may have an empty space inside. That is, when coupled to each other, the upper cover 210 and the lower cover 220 may form an internal space in which the battery module 100 is received. Each of the upper cover 210 and the lower cover 220 may be coupled to each other at the edge portions. Here, the coupling method may be bolt coupling.

Meanwhile, the battery cell 110 may be a pouch-type battery cell 110. For example, as shown in FIG. 2, 21 pouch-type battery cells 110 may be stacked side by side in the front-rear direction (Y direction).

In particular, the pouch-type battery cell 110 may include an electrode assembly (not shown), an electrolyte solution (not shown) and a pouch. Moreover, as shown in FIG. 2, the battery cell 110 may have electrode terminals 111 at two opposite ends (X direction) with respect to the center of the battery cell 110.

However, the battery module 100 according to the present disclosure is not limited to the above-described pouch-type battery cell 110 and various types of battery cells 110 known at the time of filing the patent application may be employed.

Additionally, the battery module 100 may include at least one busbar 131 configured to electrically connect the plurality of battery cells 110 and at least two busbar frames 130 configured to mount the at least one busbar 131 on the outer side. The at least two busbar frames 130 may be each provided on each of the left and right sides (X direction) of the plurality of battery cells 110.

Specifically, the busbar 131 may include a conductive metal, for example, copper, aluminum and nickel.

Additionally, the busbar frame 130 may include an electrically insulating material. For example, the busbar frame 130 may include a plastic material. More specifically, the plastic material may be poly vinyl chloride.

Moreover, the battery module 100 may include a module case 120. The module case 120 may have an internal space in which the plurality of battery cells 110 are received. For example, the module case 120 may accommodate 21 battery cells 110.

Additionally, the battery module 100 may include a side frame 300. One side of the side frame 300 may be coupled to the module case 120. For example, one side of the side frame 300 and the other side of the battery module 100 may be welded in contact with each other. The other side of the side frame 300 may be coupled to the edge portions 211, 221 of the upper cover 210 and the lower cover 220. For example, the other side of the side frame 300 and the edge portions 211, 221 of the upper cover 210 and the lower cover 220 may be fastened to each other using bolts B1 (FIG. 5).

However, the side frame 300 is not limited thereto, and to the contrary, the other side of the side frame 300 may be coupled to the module case 120, and one side may be coupled to the edge portions 211, 221 of the upper cover 210 and the lower cover 220.

Further, the upper surface of the side frame 300 may be configured to support the inner surface of the upper cover 210 in the upward direction. The lower surface of the side frame 300 may be configured to support the inner surface of the lower cover 220 in the downward direction.

According to this configuration of the present disclosure, the battery pack 1000 of the present disclosure includes the battery module 100 including the plurality of battery cells 110, the module case 120 in which the plurality of battery cells 110 are received , and the side frame 300 having one side coupled to the module case 120 and the other side interposed between the upper cover 210 and the lower cover 220 and coupled to the edge portions 211, 221 of the upper cover 210 and the lower cover 220, and thus the side frame 300 may serve as sidewalls to support the pack cover 200 in the vertical direction, thereby reinforcing the strength of the pack cover 200 without a separate sidewall member.

Moreover, the side frame 300 may be configured to be coupled to the edge portions 211, 221 of the upper cover 210 and the lower cover 220, thereby coupling the upper cover 210 and the lower cover 220 of the pack cover 200 as well as fixing the received battery module 100. Accordingly, the battery pack 1000 of the present disclosure may effectively prevent the battery module 100 from being damaged by frequent vibrations in an environment in which frequent vibrations occur such as vehicles. Ultimately, it is possible to improve the durability of the battery pack 1000 of the present disclosure.

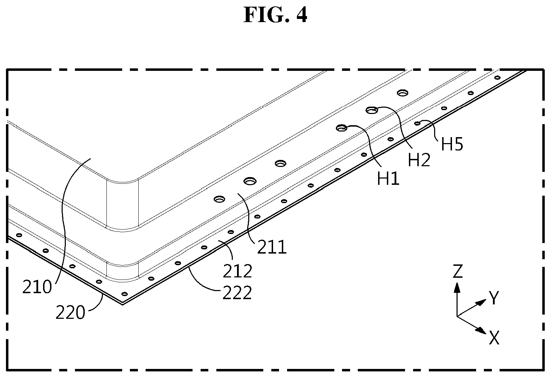

FIG. 4 is a schematic partial enlarged perspective view of the battery pack according to an embodiment of the present disclosure. Additionally, FIG. 5 is a schematic partial cross-sectional view of FIG. 1, taken along the line A-A', showing the internal configuration of the components of the battery pack.

Referring to FIGS. 4 and 5 together with FIG. 3, the side frame 300 may include, on the other side, a protrusion 310 that extends in the horizontal direction toward the edge portions 211, 221 of the upper cover 210 and the lower cover 220. The protrusion 310 may have a cuboid shape that extends in the horizontal direction. The protrusion 310 may have an opening H3 into which a part of the bolt is inserted.

Additionally, the upper cover 210 may include a first edge portion 211. The first edge portion 211 may be bent down to wrap the upper surface and the side of the protrusion 310. For example, as shown in FIG. 5, parts of the first edge portion 211 of the upper cover 210 may come into contact with the upper surface of the protrusion 310 and the horizontal side of the protrusion 310. The first edge portion 211 may have a first insertion hole H1 into which a part of the bolt is inserted.

Moreover, the lower cover 220 may include a second edge portion 221. The second edge portion 221 may be bent up to wrap the lower surface and the side of the protrusion 310. For example, as shown in FIG. 5, parts of the second edge portion 221 of the lower cover 220 may come into contact with the lower surface of the protrusion 310 and the horizontal side of the protrusion 310. The second edge portion 221 may have a second insertion hole H4 into which a part of the bolt is inserted.

In this instance, the protrusion 310 may be interposed between the edge portions 211, 221 of the upper cover 210 and the lower cover 220. Additionally, the protrusion 310, the first edge portion 211 and the second edge portion 221 may be fastened to each other. For example, the fastening method may fasten by inserting the bolt B1 into each of the opening H3, the first insertion hole H1 and the second insertion hole H4, and inserting a nut N1 in the lower part of the bolt B1.

According to this configuration of the present disclosure, the present disclosure fastens the upper cover 210, the side frame 300 and the lower cover 220 by fastening the protrusion 310, the first edge portion 211 and the second edge portion 221, thereby achieving tight coupling between the battery module 100 and the pack cover 200 received inside.

Referring back to FIG. 5 together with FIG. 3, the upper cover 210 of the present disclosure may include a first coupling portion 212. The first coupling portion 212 may extend in the outward direction from the end of the first edge portion 211. For example, as shown in FIG. 5, the first coupling portion 212 may be bent in the outward direction (horizontal direction) from the part of the first edge portion 211 in contact with the horizontal side of the protrusion 310.

Additionally, the lower cover 220 may include a second coupling portion 222 that extends in the outward direction from the end of the second edge portion 221. For example, as shown in FIG. 5, the second coupling portion 222 may be bend in the outward direction (horizontal direction) from the part of the second edge portion 221 in contact with the horizontal side of the protrusion 310.

Moreover, the second coupling portion 222 may be configured to be fastened to the first coupling portion 212 of the upper cover 210. The first coupling portion 212 and the second coupling portion 222 may be bolt-fastened. For example, the first coupling portion 212 may include a first fastening hole H5, and the second coupling portion 222 may include a second fastening hole H6. A bolt B2 may be inserted into the first fastening hole H5 and the second fastening hole H6, and a nut N2 may be inserted into the lower part of the bolt B2.

According to this configuration of the present disclosure, the present disclosure includes the first coupling portion 212 in the upper cover 210 and the second coupling portion 222 in the lower cover 220, thereby fastening the upper cover 210 and the lower cover 220 with a stronger coupling force along with the coupling structure between the first edge portion 211 and the second edge portion 221. Accordingly, the tight coupling structure of the battery pack 1000 may safely protect the battery module 100 received in the battery pack 1000 from strong external impacts. Accordingly, it is possible to effectively improve the safety of the battery pack 1000.

Referring back to FIGS. 3 and 5, the present disclosure may further include a first gasket 601, a second gasket 602 and a third gasket 603. Specifically, the first gasket 601 may be interposed between the first edge portion 211 and the protrusion 310 to prevent foreign materials from entering through a space between the first edge portion 211 and the protrusion 310. The first gasket 601 may extend in a direction. The first gasket 601 may have a hole of a size corresponding to the opening H3. That is, as shown in FIG. 3, a part of the first gasket 601 may have a plurality of holes through which the bolt B1 inserted into the opening H3 passes. For example, the battery pack 1000 of FIG. 3 may include the first gasket 601 on each of the left side and the right side with respect to the battery modules 100 received in the battery pack 1000.

Additionally, the second gasket 602 may be interposed between the second edge portion 221 and the protrusion 310 to prevent foreign materials from entering through a space between the second edge portion 221 and the protrusion 310. The second gasket 602 may extend in a direction. The second gasket 602 may have a hole of a size corresponding to the opening. That is, a part of the second gasket 602 may have a plurality of holes through which the bolt B1 inserted into the opening H3 passes. For example, the battery pack 1000 of FIG. 3 may include the second gasket 602 on each of the left side and the right side with respect to the battery modules 100 received in the battery pack 1000.

Moreover, the third gasket 603 may be configured to be interposed between the first coupling portion 212 and the second coupling portion 222. The third gasket 603 may have a rectangular ring shape that extends along the outer periphery of the upper cover 210 and the lower cover 220. A part of the third gasket 603 may have a plurality of holes through which the bolt B1 inserted into the opening H3 passes.

According to this configuration of the present disclosure, the present disclosure further includes the first gasket 601, the second gasket 602 and the third gasket 603, thereby preventing foreign materials from entering through the openings for inserting the bolts formed in each of the protrusion 310, the first edge portion 211, the second edge portion 221, the first coupling portion 212 and the second coupling portion 222. Moreover, it is possible to seal both the edge portion and the coupling portion of the pack cover 200, thereby achieving double sealing through the gasket. Accordingly, it is possible to effectively improve the waterproof performance of the pack cover 200.

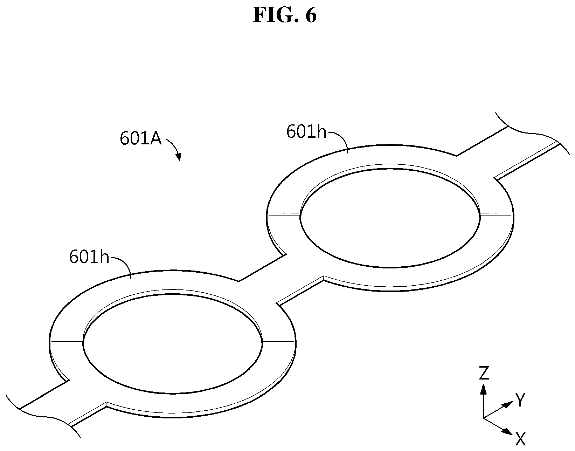

FIG. 6 is a schematic partial perspective view of a first gasket of the battery pack according to another embodiment of the present disclosure.

Referring to FIG. 6 together with FIG. 3, as opposed to the first gasket 501 of FIG. 3, a part of the first gasket 601 of the battery pack according to another embodiment of the present disclosure may have a plurality of ring shapes 601h formed at a location corresponding to the opening H3. The bolt B1 may be inserted into the ring shape 601h.

Accordingly, the first gasket 601A of the battery pack according to another embodiment of the present disclosure includes the plurality of ring shapes 601h, to reduce an unnecessary part of the first gasket 501, thereby saving the material cost and reducing the weight of the battery pack.

FIG. 7 is a schematic partial cross-sectional view of FIG. 1, taken along the line C-C', showing the internal configuration of the components of the battery pack and an external frame.

Referring to FIG. 7 together with FIGS. 1 and 3, the battery pack 1000 according to an embodiment of the present disclosure may further include a first fastening member 710. The top of the first fastening member 710 may be configured to be coupled to the external frame 2000 disposed on the outer side of the upper cover 210. The bottom of the first fastening member 710 may be configured to fasten the protrusion 310, the first edge portion 211 and the second edge portion 221.

For example, as shown in FIG. 7, the first fastening member 710 may include a stud bolt 711 and nuts 712. The top of the stud bolt 711 may be configured to be coupled to the nut 712 inserted into the external frame 2000. After the stud bolt 711 is inserted into each of the protrusion 310, the first edge portion 211 and the second edge portion 221, the bottom of the stud bolt 711 may be coupled to the nut 712, to fasten the protrusion 310, the first edge portion 211 and the second edge portion 221.

According to this configuration of the present disclosure, the present disclosure further includes the first fastening member 710 configured to be coupled to the external frame 2000 to effectively prevent the protrusion 310, the first edge portion 211 and the second edge portion 221 fastened to each other from moving by external impacts. The outer peripheral area of the pack cover 200 of the present disclosure may be fixed to the external frame 2000 by the first fastening member 710, thereby stably fixing the battery pack 1000 in an environment in which frequent vibrations occur such as vehicles. Accordingly, the internal components of the battery pack 1000 may be less affected by vibrations or external impacts.

Referring back to FIG. 5 together with FIG. 3, the battery module 100 of the present disclosure may further include a fixed frame 400. One side of the fixed frame 400 may be configured to be coupled to the module case 120. For example, as shown in FIG. 7, the right side of the fixed frame 400 may be configured to be coupled to the outer wall of the module case 120. In this instance, the coupling method may include, for example, a welding method. Alternatively, the coupling method may be a mechanical fastening method using bolts or nuts 722.

Additionally, the other side of the fixed frame 400 may be configured to be connected to at least one of the upper cover 210 or the lower cover 220.

Further, the upper surface of the fixed frame 400 may be configured to support the inner surface of the upper cover 210 in the upward direction. The lower surface of the fixed frame 400 may be configured to support the inner surface of the lower cover 220 in the downward direction.

According to this configuration of the present disclosure, the battery pack 1000 of the present disclosure further includes the fixed frame 400 in the battery module 100, to stably connect the inner surface of the battery module 100 to the upper cover 210 or the lower cover 220. Accordingly, when the battery pack 1000 is mounted in a vehicle in which vibrations or external impacts frequently occur, it is possible to prevent the battery module 100 from being unfixed by the frequent vibrations, or reduce damage of the internal components. Ultimately, it is possible to effectively improve the durability of the battery pack 1000. Moreover, since the fixed frame 400 supports the inner surface of the upper cover 210 and the lower cover 220 in the vertical direction, the fixed frame 400 may serve as an interior support of the pack cover 200, thereby reinforcing the vertical strength of the pack cover 200.

Meanwhile, referring back to FIG. 5 together with FIG. 3, the battery pack 1000 of the present disclosure may further include a cross beam 500. The cross beam 500 may be mounted in the receiving space of the lower cover 220. The cross beam 500 may extend in the Y direction. One surface (lower surface) of the cross beam 500 in the negative Z direction (downward direction) may be coupled to the upper surface of the lower cover 220. **In** this instance, the coupling method may include welding or bolt fastening.

Additionally, the other side of the fixed frame 400 may be coupled to the cross beam 500 and connected to the lower cover 220. For example, as shown in FIG. 5, the other side of the fixed frame 400 may be coupled to the cross beam 500 using a bolt B3 and connected to the lower cover 220.

According to this configuration of the present disclosure, the present disclosure further includes the cross beam 500 bolt-coupled to the fixed frame 400, thereby stably connecting the battery module 100 coupled to the fixed frame 400 to the lower cover 220. Accordingly, when the battery pack 1000 is mounted in a vehicle in which vibrations or external impacts frequently occur, it is possible to reduce the problem with frequent vibrations that unfix the battery module 100 or cause damage to the internal components. Ultimately, it is possible to effectively improve the durability of the battery pack 1000.

Meanwhile, referring back to FIG. 7, the battery pack 1000 according to an embodiment of the present disclosure may further include a second fastening member 720. The top of the second fastening member 720 may be configured to be coupled to the upper cover 210 and the external frame 2000 disposed on the outer side of the upper cover 210. Additionally, the bottom of the second fastening member 720 may be configured to be coupled to each of the fixed frame 400 and the cross beam 500. The second fastening member 720 may include a stud bolt 721 and a plurality of nuts 722. The top of the stud bolt 721 may be coupled using the nut 722 inserted and fixed to the external frame 2000 and the nut 722 disposed on the inner surface of the upper cover 210.

Additionally, when the bottom of the stud bolt 721 is inserted into the other side of the fixed frame 400 and a part of the cross beam 500 and the nut 722 inserted into the stud bolt 721 is moved down, the other side of the fixed frame 400 and the cross beam 500 may be connected to each other. In this instance, the fixed frame 400 may include, on the other side, a fixing portion 410 that extends in a direction. The fixing portion 410 may have a coupling hole H7 into which the bolt is inserted.

According to this configuration of the present disclosure, the present disclosure further includes the second fastening member 720 configured to be coupled to each of the external frame 2000, the fixed frame 400, and the cross beam 500, thereby stably connecting the battery module 100 coupled to the fixed frame 400 to the upper cover 210 and the lower cover 220. Accordingly, when the battery pack 1000 is mounted in a vehicle in which vibrations or external impacts frequently occur, it is possible to prevent the battery module 100 from being unfixed by the frequent vibrations, or reduce damage of the internal components. Ultimately, it is possible to effectively improve the durability of the battery pack 1000.

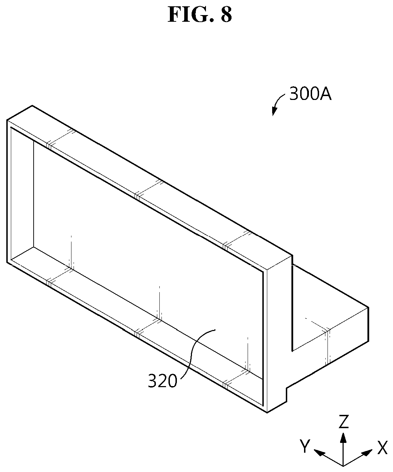

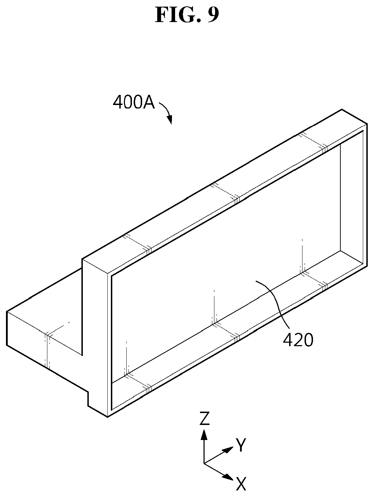

FIG. 8 is a schematic perspective view of a side frame of the battery pack according to another embodiment of the present disclosure. Additionally, FIG. 9 is a schematic perspective view of a fixed frame of the battery pack according to another embodiment of the present disclosure.

Referring to FIGS. 8 and 9 together with FIG. 3, the battery pack 1000 according to another embodiment of the present disclosure may include the side frame 300A and the fixed frame 400A of which the shape is different from the side frame 300 and the fixed frame 400 of the battery pack 1000 of FIG. 3. The remaining components are the same as the battery pack 1000 of FIG. 3.

First, the side frame 300A of FIG. 8 may include, on one side, a first insertion portion 320 having a recessed space into which a part of the module case 120 is inserted. For example, the side frame 300A of FIG. 8 may be coupled to the battery module 100 by inserting the right side of the battery module 100 into the internal space of the first insertion portion 320.

Additionally, the fixed frame 400A of FIG. 9 may include, on the other side, a second insertion portion 420 having a recessed space into which the other part of the module case 120 is inserted. That is, the fixed frame 400A of FIG. 9 may be coupled to the battery module 100 by inserting the left side of the battery module 100 into the internal space of the second insertion portion 420.

According to this configuration of the present disclosure, the side frame 300A and the fixed frame 400A of the battery pack 1000 according to another embodiment of the present disclosure include the first insertion portion 320 and the second insertion portion 420 in which parts of the battery module 100 are received respectively, and thus it is possible to easily achieve coupling between the battery module 100 and the side frame 300A and the fixed frame 400A, and when coupled by the welding method, to effectively increase the welding area, thereby effectively increasing the coupling strength between the battery module 100 and the side frame 300A and the fixed frame 400A. Accordingly, it is possible to stably maintain the coupling between the battery module 100 and the side frame 300A and the fixed frame 400A in an environment in which frequent vibration and impacts occur such as vehicles.

Meanwhile, a battery pack 1000 according to an embodiment of the present disclosure may further include various types of devices (not shown) for controlling the charge/discharge of the battery module 100, for example, a Battery Management System (BMS), a current sensor and a fuse.

Meanwhile, an electronic device (not shown) according to an embodiment of the present disclosure includes at least one battery pack 1000. The electronic device may further include a device housing (not shown) having a receiving space for receiving the battery pack 1000 and a display unit to allow a user to see the state of charge of the battery pack 1000.

Additionally, the battery pack 1000 according to an embodiment of the present disclosure may be included in a vehicle such as an electric vehicle or a hybrid electric vehicle. That is, the vehicle according to an embodiment of the present disclosure may include the above-described battery pack 1000 according to an embodiment of the present disclosure mounted in the vehicle body. In this instance, the side frame (300 in FIG. 2) may be configured to be coupled with the vehicle body of the vehicle.

Meanwhile, the terms indicating directions as used herein such as upper, lower, left, right, front and rear are used for convenience of description only, and it is obvious to those skilled in the art that the term may change depending on the position of the stated element or an observer.

While the present disclosure has been hereinabove described with regard to a limited number of embodiments and drawings, the present disclosure is not limited thereto.

### [Description of Reference Numerals]

| | | | |
|---|---|---|---|
| 1000: | Battery pack | 100: | Battery module |
| 120: | Module case | 110: | Battery cell |
| 200: | Pack cover | | 210, 220: Upper cover, Lower cover |
| 211, 221: | First edge portion, Second edge portion | | |
| 212, 222: | First coupling portion, Second coupling portion | | |
| 300: | Side frame | 310: | Protrusion |
| H1, H4, H3, H5, H6, H7: | First insertion hole, Second insertion hole, Opening, First fastening hole, Second fastening hole, Coupling hole | | |
| 601, 602, 603: | First gasket, Second gasket, Third gasket | | |
| 400: | Fixed frame | 410: | Fixing portion |
| 500: | Cross beam | | |
| 2000: | External frame | | |
| 710, 711, 712: | First fastening member, Stud bolt, Nut | | |
| 720, 721, 722: | Second fastening member, Stud bolt, Nut | | |
| 320, 420: | First insertion portion, Second insertion portion | | |

## Claims

1. A battery pack (1000), comprising:
a pack cover (200) including an upper cover (210) and a lower cover (220) and having an empty space inside, edge portions (211, 221) of each of the upper cover (210) and the lower cover (220) being coupled to each other; and
a battery module (100) including a plurality of battery cells (110), a module case (120) in which the plurality of battery cells (110) are received, and a side frame (300) having one side coupled to the module case (120) and the other side interposed between the upper cover (210) and the lower cover (220) and configured to be coupled to the edge portions (211, 221) of each of the upper cover (210) and the lower cover (220), wherein the battery module (100) further includes a fixed frame (400) having one side coupled to the module case (120) and the other side connected to at least one of the upper cover (210) or the lower cover (220),
**characterized in that** the battery pack (1000) further comprises:
a cross beam (500) extending in a direction and coupled to an inner side of the lower cover (220), wherein the other side of the fixed frame (400) is coupled to the cross beam (500) and connected to the lower cover (220), and
a second fastening member (720) having a top configured to be coupled to the upper cover (210) and an external frame (2000) disposed on the outer side of the upper cover (210), and a bottom configured to be coupled to each of the fixed frame (400) and the cross beam (500).

2. The battery pack (1000) according to claim **1,** wherein the side frame (300) includes, on the other side, a protrusion (310) extending in a horizontal direction to the edge portions (211, 221) of each of the upper cover (210) and the lower cover (220),
the upper cover (210) includes a first edge portion (211) bent down to wrap an upper surface and a side of the protrusion (310),
the lower cover (220) includes a second edge portion (221) bent up to wrap a lower surface and the side of the protrusion (310), and
the protrusion (310), the first edge portion (211) and the second edge portion (221) are fastened to one another.

3. The battery pack (1000) according to claim 2, wherein the upper cover (210) includes a first coupling portion (212) extending in an outward direction from end of the first edge portion (211), and
the lower cover (220) includes a second coupling portion (222) fastened to the first coupling portion (212) and extending in the outward direction from an end of the second edge portion (221).

4. The battery pack (1000) according to claim 3, further comprising:
a first gasket (601) interposed between the first edge portion (211) and the protrusion (310);
a second gasket (602) interposed between the second edge portion (221) and the protrusion (310); and
a third gasket (603) interposed between the first coupling portion (212) and the second coupling portion (222).

5. The battery pack (1000) according to claim 2, further comprising:
a first fastening member (710) having a top configured to be coupled to an external frame (2000) disposed on an outer side of the upper cover (210), and configured to fasten the protrusion (310), the first edge portion (211) and the second edge portion (221).

6. The battery pack (1000) according to claim 1, wherein the side frame (300) includes a first insertion portion (320) having a recessed space into which a part of the module case (120) is inserted, and
the fixed frame (400) includes a second insertion portion (420) having a recessed space into which a part of the module case (120) is inserted.

7. An electronic device comprising at least one battery pack (1000) according to any one of claims 1 to 6.

8. A vehicle comprising at least one battery pack (1000) according to any one of claims 1 to 6.

## Patentansprüche

1. Batteriepack (1000), umfassend:
eine Packabdeckung (200), welche eine obere Abdeckung (210) und eine untere Abdeckung (220) umfasst und welche im Inneren einen leeren Raum aufweist, wobei Randabschnitte (211, 221) jeder aus der oberen Abdeckung (210) und der unteren Abdeckung (220) miteinander gekoppelt sind; und
ein Batteriemodul (100), welches eine Mehrzahl von Batteriezellen (110), ein Modulgehäuse (120), in welchem die Mehrzahl von Batteriezellen (110) aufgenommen sind, und einen Seitenrahmen (300) umfasst, welcher eine mit dem Modulgehäuse (120) gekoppelte Seite sowie die andere Seite zwischen die obere Abdeckung (210) und die untere Abdeckung (220) eingefügt aufweist und welcher dazu eingerichtet ist, mit den Randabschnitten (211, 221) von jeder aus der oberen Abdeckung (210) und der unteren Abdeckung (220) gekoppelt zu sein, wobei das Batteriemodul (100) ferner einen fixierten Rahmen (400) umfasst, welcher eine mit dem Modulgehäuse (120) gekoppelte Seite sowie die andere Seite mit wenigstens einer aus der oberen Abdeckung (210) oder der unteren Abdeckung (220) verbunden aufweist,
**dadurch gekennzeichnet, dass** der Batteriepack (1000) ferner umfasst:
einen Querbalken (500), welcher sich in einer Richtung erstreckt und mit einer Innenseite der unteren Abdeckung (220) gekoppelt ist, wobei die andere Seite des fixierten Rahmens (400) mit dem Querbalken (500) gekoppelt ist und mit der unteren Abdeckung (220) verbunden ist, und
ein zweites Befestigungselement (720), welches eine Oberseite, welche dazu eingerichtet ist, mit der oberen Abdeckung (210) und einem externen Rahmen (2000) gekoppelt zu sein, welcher an der Außenseite der oberen Abdeckung (210) angeordnet ist, und eine Unterseite aufweist, welche dazu eingerichtet ist, mit jedem aus dem fixierten Rahmen (400) und dem Querbalken (500) gekoppelt zu sein.

2. Batteriepack (1000) nach Anspruch 1, wobei der Seitenrahmen (300) an der anderen Seite einen Vorsprung (310) umfasst, welcher sich in einer horizontalen Richtung zu den Randabschnitten (211, 221) von jeder aus der oberen Abdeckung (210) und der unteren Abdeckung (220) erstreckt,
wobei die obere Abdeckung (210) einen ersten Randabschnitt (211) umfasst, welcher nach unten gebogen ist, um eine obere Fläche und eine Seite des Vorsprungs (310) zu umwickeln,
wobei die untere Abdeckung (220) einen zweiten Randabschnitt (221) umfasst, welcher nach oben gebogen ist, um eine untere Fläche und die Seite des Vorsprungs (310) zu umwickeln, und
wobei der Vorsprung (310), der erste Randabschnitt (211) und der zweite Randabschnitt (221) aneinander befestigt sind.

3. Batteriepack (1000) nach Anspruch 2, wobei die obere Abdeckung (210) einen ersten Kopplungsabschnitt (212) umfasst, welcher sich in einer Richtung nach Außen von einem Ende des ersten Randabschnitts (211) erstreckt, und
wobei die untere Abdeckung (220) einen zweiten Kopplungsabschnitt (222) umfasst, welcher an dem ersten Kopplungsabschnitt (212) befestigt ist und sich in der Richtung nach Außen von einem Ende des zweiten Randabschnitts (221) erstreckt.

4. Batteriepack (1000) nach Anspruch 3, ferner umfassend:
eine erste Dichtung (601), welche zwischen dem ersten Randabschnitt (211) und dem Vorsprung (310) eingefügt ist;
eine zweite Dichtung (602), welche zwischen dem zweiten Randabschnitt (221) und dem Vorsprung (310) eingefügt ist; und
eine dritte Dichtung (603), welche zwischen dem ersten Kopplungsabschnitt (212) und dem zweiten Kopplungsabschnitt (222) eingefügt ist.

5. Batteriepack (1000) nach Anspruch 2, ferner umfassend:
ein erstes Befestigungselement (710), welches eine Oberseite aufweist, welche dazu eingerichtet ist, mit einem externen Rahmen (2000) gekoppelt zu sein, welcher an einer Außenseite der oberen Abdeckung (210) angeordnet ist, und welches dazu eingerichtet ist, den Vorsprung (310), den ersten Randabschnitt (211) und den zweiten Randabschnitt (221) zu befestigen.

6. Batteriepack (1000) nach Anspruch 1, wobei der Seitenrahmen (300) einen ersten Einführabschnitt (320) umfasst, welcher einen vertieften Raum aufweist, in welchen ein Teil des Modulgehäuses (120) eingeführt ist, und
wobei der fixierte Rahmen (400) einen zweiten Einführabschnitt (420) umfasst, welcher einen vertieften Raum aufweist, in welchen ein Teil des Modulgehäuses (120) eingeführt ist.

7. Elektronische Vorrichtung, umfassend wenigstens einen Batteriepack (1000) nach einem der Ansprüche 1 bis 6.

8. Fahrzeug, umfassend wenigstens einen Batteriepack (1000) nach einem der Ansprüche 1 bis 6.

## Revendications

1. Bloc-batterie (1000), comprenant :
un couvercle de bloc (200) comportant un couvercle supérieur (210) et un couvercle inférieur (220) et ayant un espace vide à l'intérieur, des portions de bord (211, 221) de chacun du couvercle supérieur (210) et du couvercle inférieur (220) étant couplées l'une à l'autre ; et
un module de batterie (100) comportant une pluralité d'éléments de batterie (110), un boîtier de module (120) dans lequel la pluralité d'éléments de batterie (110) sont reçus, et un cadre latéral (300) ayant un côté couplé au boîtier de module (120) et l'autre côté interposé entre le couvercle supérieur (210) et le couvercle inférieur (220) et configuré pour être couplé aux portions de bord (211, 221) de chacun du couvercle supérieur (210) et du couvercle inférieur (220), dans lequel le module de batterie (100) comporte en outre un cadre fixe (400) ayant un côté couplé au boîtier de module (120) et l'autre côté connecté à au moins un parmi le couvercle supérieur (210) ou le couvercle inférieur (220),
**caractérisé en ce que** le bloc-batterie (1000) comprend en outre :
une poutre transversale (500) s'étendant dans une direction et couplée à un côté intérieur du couvercle inférieur (220), dans lequel l'autre côté du cadre fixe (400) est couplé à la poutre transversale (500) et connecté au couvercle inférieur (220), et
un second organe de fixation (720) ayant un dessus configuré pour être couplé au couvercle supérieur (210) et un cadre externe (2000) disposé sur le côté extérieur du couvercle supérieur (210), et un fond configuré pour être couplé à chacun du cadre fixe (400) et de la poutre transversale (500).

2. Bloc-batterie (1000) selon la revendication 1, dans lequel le cadre latéral (300) comporte, de l'autre côté, une saillie (310) s'étendant dans une direction horizontale jusqu'aux portions de bord (211, 221) de chacun du couvercle supérieur (210) et du couvercle inférieur (220),
le couvercle supérieur (210) comporte une première portion de bord (211) pliée vers le bas pour envelopper une surface supérieure et un côté de la saillie (310),
le couvercle inférieur (220) comporte une seconde portion de bord (221) pliée vers le haut pour envelopper une surface inférieure et le côté de la saillie (310), et
la saillie (310), la première portion de bord (211) et la seconde portion de bord (221) sont fixées les unes aux autres.

3. Bloc-batterie (1000) selon la revendication 2, dans lequel le couvercle supérieur (210) comporte une première portion de couplage (212) s'étendant dans une direction vers l'extérieur à partir de l'extrémité de la première portion de bord (211), et
le couvercle inférieur (220) comporte une seconde portion de couplage (222) fixée à la première portion de couplage (212) et s'étendant dans la direction vers l'extérieur à partir d'une extrémité de la seconde portion de bord (221).

4. Bloc-batterie (1000) selon la revendication 3, comprenant en outre :
un premier joint (601) interposé entre la première portion de bord (211) et la saillie (310) ;
un deuxième joint (602) interposé entre la seconde portion de bord (221) et la saillie (310) ; et
un troisième joint (603) interposé entre la première portion de couplage (212) et la seconde portion de couplage (222).

5. Bloc-batterie (1000) selon la revendication 2, comprenant en outre :
un premier organe de fixation (710) ayant un dessus configuré pour être couplé à un cadre externe (2000) disposé sur un côté extérieur du couvercle supérieur (210), et
configuré pour fixer la saillie (310), la première portion de bord (211) et la seconde portion de bord (221).

6. Bloc-batterie (1000) selon la revendication 1, dans lequel le cadre latéral (300) comporte une première portion d'insertion (320) ayant un espace en retrait dans lequel une partie du boîtier de module (120) est insérée, et
le cadre fixe (400) comporte une seconde portion d'insertion (420) ayant un espace en retrait dans lequel une partie du boîtier de module (120) est insérée.

7. Dispositif électronique comprenant au moins un bloc-batterie (1000) selon l'une quelconque des revendications 1 à 6.

8. Véhicule comprenant au moins un bloc-batterie (1000) selon l'une quelconque des revendications 1 à 6.
